# EUROPEAN PATENT SPECIFICATION

(11) **EP 1 912 385 B1**
(45) Date of publication and mention of the grant of the patent: **26.08.2009**
(21) Application number: 06122310.3
(22) Date of filing: 13.10.2006
(51) Int. Cl.: H04L 12/56

(54) **System and method for deactivating IP sessions of lower priority**
System und Verfahren zum Beenden von IP-Verbindungen niedrigerer Priorität
Système et procédé afin de désactiver des sessions IP de priorités moindres

(43) Date of publication of application: 16.04.2008
(73) Proprietor: Research In Motion Limited, Waterloo, Ontario N2L 3W8 (CA)
(72) Inventor: Wirtanen, Jeff, Kanata, Ontario K2K 2L9 (CA); Islam, M. Khaledul, Ottawa, Ontario K2K 3N4 (CA); Kim, Jin, Ottawa, Ontario K1Y 4S3 (CA)
(74) Representative: Rickard, David John

(56) References cited:
- EP-A- 1 176 766
- EP-A- 1 686 752
- WO-A-20/05084061
- WO-A2-03/017522

## Description

The application relates generally to wireless communication, and more particularly to IP sessions.

Communications between a mobile device and a corresponding node are processed in a UMTS (Universal Mobile Telecommunications System) network through GPRS (General Packet Radio Service) serving nodes. The GPRS serving nodes include an SGSN (Serving GPRS Support Node) and a GGSN (Gateway GPRS Support Node). Such communication exchange between the mobile device and the corresponding node involve communication exchange between the mobile device and the SGSN. Communication exchanges such as user plane communication (i.e. IP data traffic) between the mobile device and the SGSN node use one or more PDP contexts.
There may be many PDP contexts depending on how many different applications of the mobile device are communicating over PDP contexts. However, the number of PDP contexts for the mobile device may be limited by the number of PDP contexts supported in the routing area in which the mobile device resides. Different routing areas may support different numbers of PDP contexts.

There may be instances when the mobile device moves from a first routing area supporting a plurality of PDP contexts to a second routing area supporting fewer PDP contexts. In this situation, if the mobile device has more PDP contexts than is supported by the second routing area, then the SGSN will deactivate PDP contexts such that the mobile device does not have more PDP contexts than are supported by the second routing area. Typically, the mobile device cannot predict which PDP contexts will be deactivated. This can result in a poor user experience, especially if a PDP context being used for a voice call is deactivated. Another example of poor user experience is if a PDP context being used for IP Modem/Tethered Modem is deactivated.

An existing approach is found in EP 1 686 752 which discloses a method for achieving multimedia priority services, which sets up priority service classes for the user equipment (UE) using multimedia services. Another existing approach is found in WO 03/017522 which describes how combined session and resource tracking in a mobile node (MN) and/or base station in dynamic network resource environment can be used to control reactions to resource shortage. Yet another existing approach is found in WO 2005/084061, which relates to a method for managing radio resources allocated by the radio network controller of a UTRAN radio access network.

### General

According to a broad aspect, there may be provided a method in a mobile device comprising: determining a respective priority for each of a plurality of Internet Protocol 'IP' sessions of the mobile device, the respective priorities indicating which of the plurality of IP sessions of the mobile device should be maintained and which of the plurality of IP sessions of the mobile device should be deactivated if the mobile device moves into an area that supports a maximum number of IP sessions per mobile device that is fewer than how many IP sessions are established for the mobile device; and transmitting an indication of each respective priority to a wireless network.

According to another broad aspect, there may be provided a computer readable medium having computer executable instructions stored thereon for execution on a processor so as to implement the method summarised above.

According to a broad aspect, there may be provided a mobile device comprising: a wireless access radio adapted to communicate with a wireless network; an IP session priority function adapted to: determine a respective priority for each of a plurality of IP sessions of the mobile device, the respective priorities indicating which of the plurality of IP sessions of the mobile device should be maintained and which of the plurality of IP sessions of the mobile device should be deactivated if the mobile device moves into an area that supports a maximum number of IP sessions per mobile device that is fewer than how many IP sessions are established for the mobile device; and transmit an indication of each respective priority to the wireless network.

According to a broad aspect, there may be provided a method in a wireless network maintaining a plurality of IP sessions for a mobile device; receiving an indication of a respective priority for each of the plurality of IP sessions; and upon determining that at least one of the plurality of IP sessions of the mobile device is to be deactivated due to the mobile device moving into an area supporting fewer IP sessions for the mobile device than are established for the mobile device, deactivating an IP session of the mobile device that is indicated to be of lower priority than at least one other of said plurality of IP sessions.

According to a broad aspect, there may be provided a computer readable medium having computer executable instructions stored thereon for execution on a processor so as to implement the method summarised above.

According to a broad aspect, there may be provided a wireless network comprising an IP session function adapted to: maintain a plurality of IP sessions for a mobile device; receive an indication of a respective priority for each of the plurality of IP sessions; and upon determining that at least one of the plurality of IP sessions of the mobile device is to be deactivated due to the mobile device moving into an area supporting fewer IP sessions for the mobile device than are established for the mobile device, deactivate an IP session of the mobile device that is indicated to be of lower priority.

### Brief Description of the Drawings

Embodiments will now be described with reference to the attached drawings in which:
Figure 1A is a block diagram of an example wireless network and a mobile device;
Figure 1B is a block diagram of the mobile device shown in Figure 1A;
Figure 1C is a block diagram of another mobile device;
Figure 2 is a flowchart of an example method of indicating priority of IP sessions to a wireless network;
Figures 3A through 3C are flowcharts of example methods of transmitting the indication to the wireless network;
Figures 4A through 4C are tables of example message contents of messages that can be used to transmit the indication to the wireless network;
Figures 5A and 5B are tables of an example PDP context priority information element;
Figures 6A and 6B are flowcharts of example methods of determining the respective priority for each IP session; and
Figure 7 is a flowchart of an example method of deactivating an IP session that is indicated to be of lower priority.

### Description of Preferred Embodiments

### Wireless Communication System

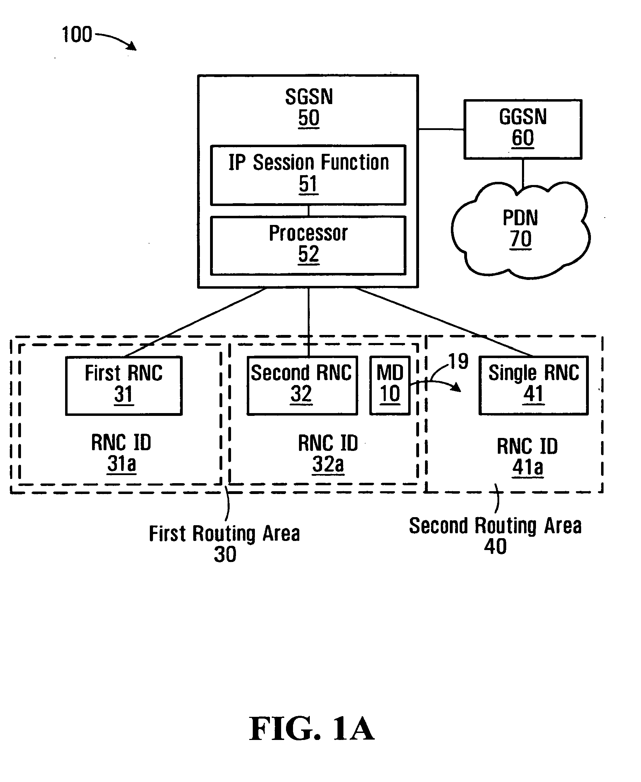

Referring now to Figure 1A, shown is a block diagram of an example wireless network 100 and a mobile device 100. The wireless network 100 has a first routing area 30 and a second routing area 40. There may be other routing areas, but they are not shown for simplicity. Each routing area has at least one RNC (Radio Network Controller). In the illustrated example, the first routing area 30 has a first RNC 31 and a second RNC 32 while the second routing area 40 has a single RNC 41. Each RNC 31,32,41 is associated with a respective RNC Id.The first RNC 31 and the second RNC 32 of the first routing area 30 have an RNC Id 31a and an RNC Id 32a, respectively, while the single RNC 41 of the second routing area 40 has an RNC Id 41a. Each cell (not shown) within an RNC (via a Node B) is associated with an RAI (Routing Area Identification) in a hierarchal fashion. An RAI may include one or more cells and span across RNCs. In some implementations, each RAI is a combination of a country code, a network code, and a routing area code. RAIs may differ for other wireless networks.

In the illustrated example, each RNC 31,32,41 is coupled to an SGSN (Serving General Packet Radio Service Support Node) 50, which in turn is coupled to a GGSN (Gateway GPRS Support Node) 60, which in turn is coupled to a PDN (Packet Data Network) 70. The PDN 70 may for example be an Internet. The SGSN 50 has an IP session function 51 coupled to a processor 52 and may have other components, but they are not shown for simplicity.

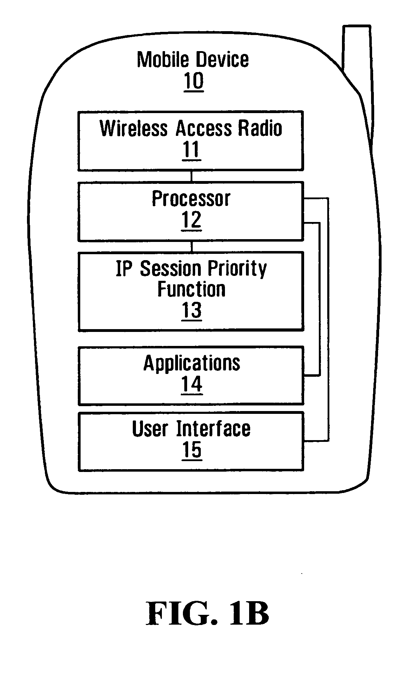

The wireless network 100 is shown with a single mobile device, namely the mobile device 10. There may be other mobile devices, but they are not shown for simplicity. With reference to Figure 1B, shown is a block diagram of the mobile device 10 shown in Figure 1A. The mobile device 10 has a processor 12, which is coupled to a wireless access radio 11, an IP session priority function 13, applications 14, and a user interface 15. The mobile device 10 may have other components, but they are not shown for sake of simplicity. With reference back to Figure 1A, the mobile device 10 is currently positioned within the first routing area 31. However, the mobile device 10 may move to another routing area such as the second routing area 40 as indicated by a moving arrow 19.

In operation, the mobile device 10 is adapted to communicate with the wireless network 100 using its wireless access radio 11. Such communication may for example be voice communication, electronic messaging, or any other appropriate form of communication supported by the applications 14. At least some communication with the wireless network 100 is over one or more IP sessions between the mobile device 10 and the SGSN 50. A PDP (Packet Data Protocol) session is an example of an IP session. There may be many IP sessions between the mobile device 10 and the SGSN 50 depending on how many of the applications 14 have an established IP session. However, the number of IP sessions is typically limited by the routing area in which the mobile device 10 resides, which is currently the first routing area 30.

Different routing areas may support different number of IP sessions for a given mobile device. This may for example depend on the RNC of the routing area, or may alternatively depend on any other limitation of the wireless network. In the illustrated example, the first routing area is assumed to support three IP sessions for the mobile device 10 while the second routing area 40 is assumed to support only a single IP session for the mobile device 10. The mobile device 10 is assumed to have three established IP sessions while in the first routing area. However, upon moving to the second routing area as indicated by the moving arrow 11, two of the three IP sessions will be deactivated since the second routing area supports only a single IP session. The SGSN 50 deactivates the two IP sessions, but this may be triggered by signaling from the RNC.

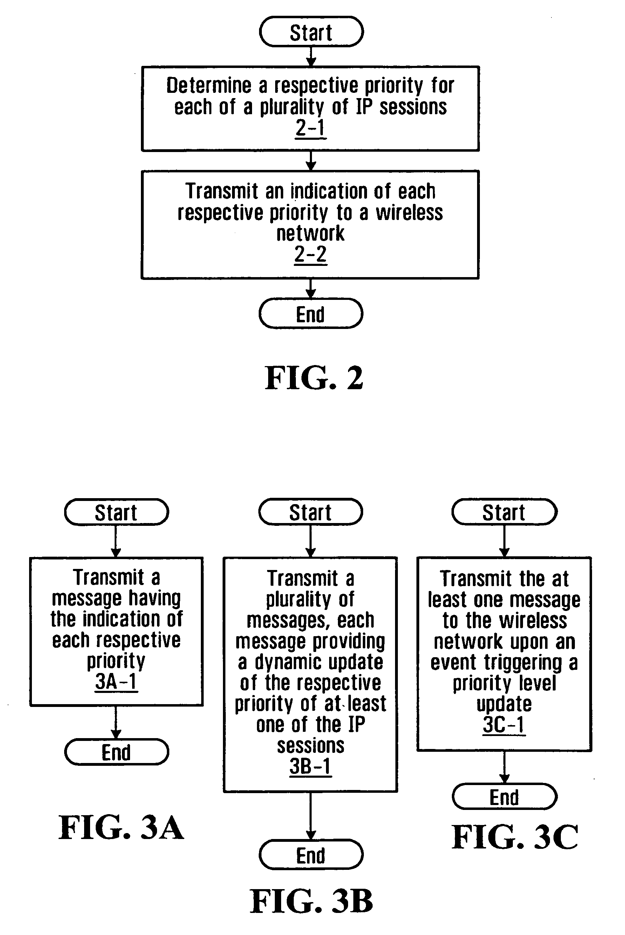

According to an embodiment of the application, the IP session priority function 13 implements a method in the mobile device 10 so as to determine a respective priority for each of the IP sessions and to transmit an indication of each respective priority to the wireless network 100. The SGSN 50 receives the indication of the respective priority for each IP session. According to another embodiment of the application, the IP session function 51 implements a method in the SGSN 50 so as to deactivate an IP session that is indicated to be of lower priority upon determining that at least one IP session is to be deactivated due to the mobile device 10 moving into a routing area supporting fewer IP sessions than are established for the mobile device. In the event that more than one IP session is to be deactivated, then more than one IP session that is indicated to be of lower priority is deactivated. Accordingly, IP sessions that are not deactivated are those indicated by the mobile device 10 to be of greater priority. Further details of the methods are provided later with reference to Figures 2 through 5.

It is to be understood that an IP session is indicated to be of "lower" priority when its priority is generally indicated as being lower than other IP sessions. In some implementations, this is the IP session with the lowest priority. An IP session indicated as having a lower priority may not be a low priority IP session per se, but is nonetheless indicated as having a lower priority than other IP sessions.

At some later time, the mobile device 10 may move back to a routing area supporting more IP sessions, such as the first routing area 30. In this event, the mobile device 10 may choose to reestablish those IP sessions that were deactivated. In some implementations, it is up to the mobile device 10 to reestablish an IP session, for example by transmitting an Activate PDP context request message to the SGSN 50 of the wireless network 100. In response to the Activate PDP context request message, the SGSN 50 may establish an IP session for the mobile device 10. In some implementations, the mobile device 10 automatically initiates the IP session to be reestablished. In other implementations, a user of the mobile device 10 provides input, for example using the user interface 15, so as to initiate the IP session to be reestablished. In other implementations, the wireless network 100 initiates the IP session to be reestablished. For example, the wireless network 100 may send a Request PDP context Activation message to the mobile device 100. Other implementations are possible.

In the illustrated example, it is assumed that within each routing area the same number of IP sessions is supported for the mobile device 10 regardless of how many RNCs are present. Typically a routing area has a single RNC, such is the case with the second routing area 40. The number of IP sessions supported for a given mobile device is currently limited by the RNC. Therefore, while the limiting factor is actually the RNC, the routing area can typically be regarded as the limiting factor. However, a routing area might have more than one RNC, such is the case with the first routing area 30. Therefore, it is possible for a routing area to support a different number of PDP contexts for a mobile device depending on where in the routing area the mobile device resides. This is the case in which the routing area cannot be regarded as the limiting factor. While the examples presented herein refer to "routing areas" as limiting the number of IP sessions for a mobile device, it is to be understood that more generally an "area" limits the number of IP sessions for the mobile device. The "area" may be a routing area, a portion of a routing area as defined for example by an RNC Id, a network, a cell id, or any other area in which the number of IP sessions supported for a mobile device is limited.

In some implementations, there are subtleties between the Connected/Active state (CELL_DCH, CELL_FACH) and the Idle state (CELL_PCH, URA_PCH, IDLE) for the mobile device. The routing area is known to the mobile device while in the Idle state; however, the RNC id is typically not known. While in the Idle state, a mobile device moves to the Connected/Active state in order to find out its serving RNC id. This may waste battery life, etc. Therefore, in some implementations, the number of IP sessions supported is considered for a routing area irrespective of whether this is the lowest level of granularity.

There are many possibilities for the IP session priority function 13 of the mobile device 10. In the illustrated example, the IP session priority function 13 is implemented as software and is executed on the processor 12. However, more generally, the IP session priority function 13 may be implemented as software, hardware, firmware, or any appropriate combination thereof. In the illustrated example, the IP session priority function 13 is shown as a single component. However, more generally, the IP session priority function 13 may be implemented as one or more components. An example in which the IP session priority function 13 includes more than one component is described below.

In some implementations, the IP session priority function 13 includes a NAS (Non Access Stratum) and an AS (Access Stratum). The NAS includes a session management layer and manages IP sessions. The NAS may for example initiate an Activate PDP context request message to be sent to the SGSN 50. The AS manages an air interface of the wireless access radio and includes a respective RAB (Radio Access Bearer) for each active IP session. An RAB is an identifier for an RF (Radio Frequency) pipe. There may be dormant IP sessions without respective RABs. The AS may for example initiate a service request message to be sent to the RNC.

There are many possibilities for the IP session function 51 of the wireless network 100. In the illustrated example, the IP session function 51 is implemented as software and is executed on the processor 52. However, more generally, the IP session function 51 may be implemented as software, hardware, firmware, or any appropriate combination thereof. In the illustrated example, the IP session function 51 is shown as a single component of the SGSN 50. However, more generally, the IP session function 51 may be implemented as one or more components and may be implemented as part of, or separate from, the SGSN 50. The one or more components may be distributed throughout the wireless network 100, or reside in a common location. Other implementations are possible.

There are many possibilities for the wireless network 100. In the illustrated example, the wireless network 100 is a UMTS (Universal Mobile Telecommunications System) network. However, more generally, the wireless network 100 may be any wireless network in which there are areas supporting different numbers of IP sessions.

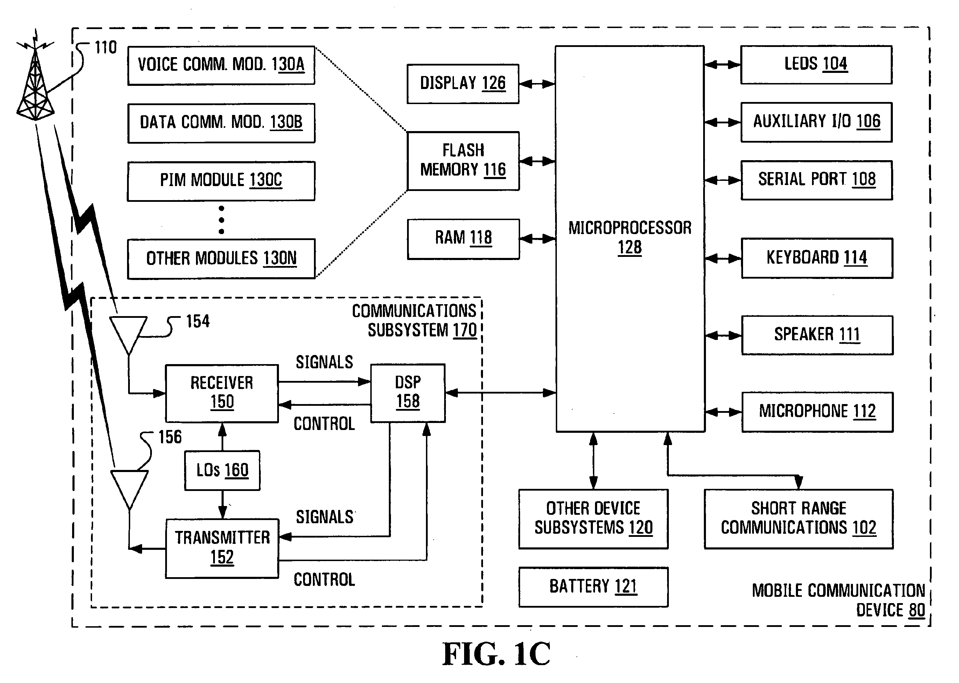

There are many possibilities for the mobile device 10. Referring now to Figure 1C, shown is a block diagram of another mobile device 80 that may implement any of the methods described herein. It is to be understood that the mobile device 80 is shown with very specific details for example purposes only.

A processing device (a microprocessor 128) is shown schematically as coupled between a keyboard 114 and a display 126. The microprocessor 128 controls operation of the display 126, as well as overall operation of the mobile device 80, in response to actuation of keys on the keyboard 114 by a user.

The mobile device 80 has a housing that may be elongated vertically, or may take on other sizes and shapes (including clamshell housing structures). The keyboard 114 may include a mode selection key, or other hardware or software for switching between text entry and telephony entry.

In addition to the microprocessor 128, other parts of the mobile device 80 are shown schematically. These include: a communications subsystem 170; a short-range communications subsystem 102; the keyboard 114 and the display 126, along with other input/output devices including a set of LEDS 104, a set of auxiliary I/O devices 106, a serial port 108, a speaker 111 and a microphone 112; as well as memory devices including a flash memory 116 and a Random Access Memory (RAM) 118; and various other device subsystems 120. The mobile device 80 may have a battery 121 to power the active elements of the mobile device 80. The mobile device 80 is in some embodiments a two-way radio frequency (RF) communication device having voice and data communication capabilities. In addition, the mobile device 80 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device 80 may also be stored to the RAM 118.

The microprocessor 128, in addition to its operating system functions, enables execution of software applications on the mobile device 80. A predetermined set of software applications that control basic device operations, such as a voice communications module 130A and a data communications module 130B, may be installed on the mobile device 80 during manufacture. In addition, a personal information manager (PIM) application module 130C may also be installed on the mobile device 80 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system. As well, additional software modules, illustrated as another software module 130N, may be installed during manufacture.

Communication functions, including data and voice communications, are performed through the communication subsystem 170, and possibly through the short-range communications subsystem 170. The communication subsystem 170 includes a receiver 150, a transmitter 152 and one or more antennas, illustrated as a receive antenna 154 and a transmit antenna 156. In addition, the communication subsystem 170 also includes a processing module, such as a digital signal processor (DSP) 158, and local oscillators (LOs) 160. The specific design and implementation of the communication subsystem 170 is dependent upon the communication network in which the mobile device 80 is intended to operate. For example, the communication subsystem 170 of the mobile device 80 may be designed to operate with the Mobitex^{™}, DataTAC^{™} or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 80.

Network access may vary depending upon the type of communication system. For example, in the Mobitex^{™} and DataTAC^{™} networks, mobile devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the mobile device 80 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the mobile device 80. In addition, the display 126 may also be utilized in voice communication mode, for example, to display the identity of a calling party, the duration of a voice call, or other voice call related information.

The short-range communications subsystem 102 enables communication between the mobile device 80 and other proximate systems or devices, which need not necessarily be similar devices. For example, the short-range communications subsystem may include an infrared device and associated circuits and components, or a Bluetooth^{™} communication module to provide for communication with similarly-enabled systems and devices.

### Method in a Mobile Device

Referring now to Figure 2, shown is a flowchart of an example method of indicating priority of IP sessions to a wireless network. This method may be implemented by a mobile device, for example by the IP session priority function 13 of the mobile device 10 shown in Figures 1A and 1B, or by the mobile device 80 shown in Figure 1C. At step 2-1 the mobile device determines a respective priority for each of a plurality of IP sessions. At step 2-2, the mobile device transmits an indication of each respective priority to a wireless network.

There are many ways that the mobile device may transmit the indication to the wireless network. Examples are provided with reference to Figures 3A through 3C. In some implementations, as indicated by step 3A-1, the mobile device transmits a message having the indication of each respective priority. In other implementations, as indicated by step 3B-1, the mobile device transmits a plurality of messages. Each message provides a dynamic update of the respective priority of at least one of the IP sessions. The plurality of messages may be of varying type, or of the same type. In other implementations, as indicated by step 3C-1, the mobile device transmits the at least one message to the wireless network upon an event triggering a priority level update. Other implementations are possible.

There are many types of messages that may be transmitted for providing the indication of each respective priority. Specific types of messages are provided below for example purposes. It is to be understood that specific details of the example messages are provided for example purposes only.

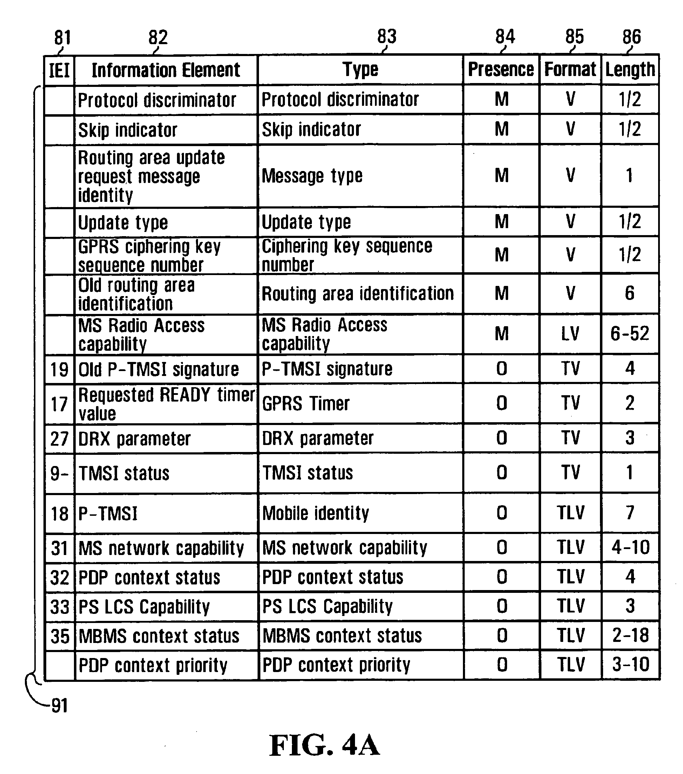

In some implementations, the message is an RAU (Routing Area Update) request message. The RAU request message may for example be sent periodically, upon the mobile device crossing a routing area boundary, or when the mobile device transitions from an idle state to a standby state such as when the mobile device is powered on. The message may be sent by the mobile device to the wireless network either to request an update of its location file or to request an IMSI attach for non-GPRS services. In some instances the RAU request message is also sent whenever there is an active voice call, irrespective of whether there is data to send. In some implementations, the RAU request message is provided with the indication as a new field to convey PDP context priority. Referring to Figure 4A, shown is a table of example message content of the RAU request message. The table has columns labeled as IEI 81, Information Element 82, Type 83, Presence 84, Format 85, and length 86. The table has a plurality of fields 91 including a "PDP context priority" field, which is the new field to convey PDP context priority. The "PDP context priority" field has an IEI value, which may for example be 38.

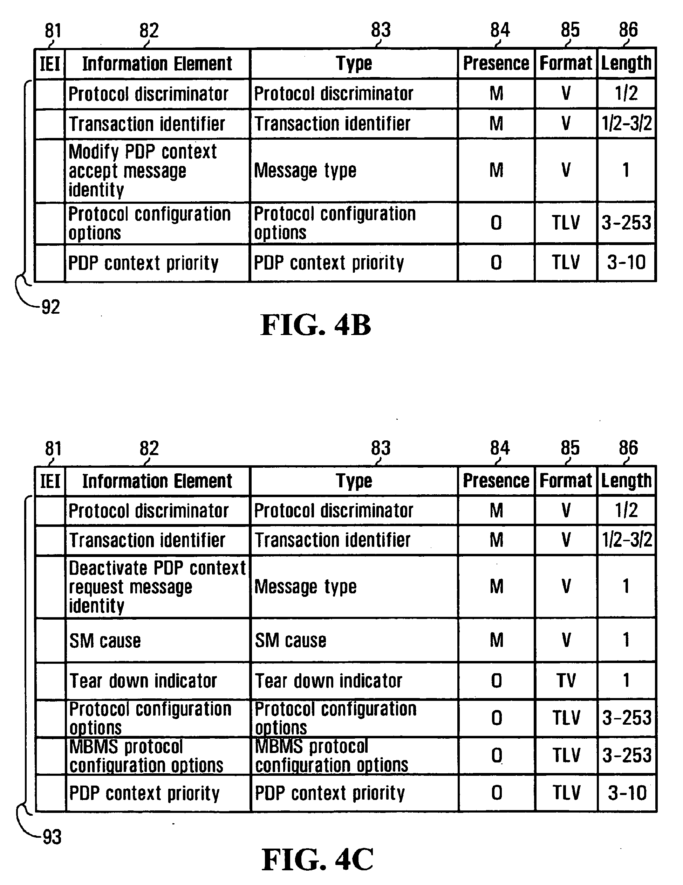

In other implementations, the message is a Modify PDP Context Accept message. This message may be sent by the mobile device to the wireless network to acknowledge the modification of an active PDP context. In some implementations, the Modify PDP Context Accept message is provided with the indication as a new field to convey PDP context priority. Referring to Figure 4B, shown is a table of example message content of the Modify PDP Context Accept message. The table has columns labeled as IEI 81, Information Element 82, Type 83, Presence 84, Format 85, and length 86. The table has a plurality of fields 92 including a "PDP context priority" field, which is the new field to convey PDP context priority. The "PDP context priority" field has an IEI value, which may for example be 38.

In other implementations, the message is an Activate PDP (Packet Data Protocol) Request message. The Activate PDP Request message may for example be sent when the mobile device is requesting a PDP session to be activated or when the mobile device is to activate a new NSAPI (Network Service Access Point Identifier). In some implementations, the Activate PDP context request message is provided with the indication as a new field to convey PDP context priority. In some implementations, the new field conveys PDP context priority of the new PDP context and/or existing PDP contexts. By conveying PDP context priority of the existing PDP contexts, changes to the priority of the existing PDP contexts can be conveyed. Other implementations are possible.

In other implementations, the message is a PDP Status Request message. The PDP Status Request message may for example be sent when the mobile device is requesting status of a PDP session. In some implementations, the PDP Status Request message is provided with the indication as a new field to convey PDP context priority.

In other implementations, the message is a Deactivate PDP context request message. The Deactivate PDP context request message may for example be sent when the mobile device is deactivating a PDP context. This message may be sent to request deactivation of an active PDP context or an active MBMS context. In some implementations, the Deactivate PDP context request message is provided with the indication as a new field to convey PDP context priority. In other implementations, the Deactivate PDP context request message does not include the indication as a field, as deactivating a PDP context serves as an implicit indication that the priority of the PDP context is lower than other PDP contexts. Referring to Figure 4C, shown is a table of example message content of the Deactivate PDP context request message. The table has columns labeled as IEI 81, Information Element 82, Type 83, Presence 84, Format 85, and length 86. The table has a plurality of fields 93 including a "PDP context priority" field, which is the new field to convey PDP context priority. The "PDP context priority" field has an IEI value, which may for example be 38.

In other implementations, the message is a PDP Service Request message. The PDP Service Request message may for example be sent when the mobile device is requesting service for an existing PDP context. In some implementations, the PDP Service Request message is provided with the indication as a new field to convey PDP context priority.

In other implementations, the message is a priority update message. The priority message may be any appropriate message capable of carrying the indication of each respective priority. The priority message may for example be sent whenever the mobile device determines that a priority updated is to be executed. In some implementations, the priority update message is a Modify PDP Context Request message sent from the mobile device to the wireless network. In some implementations, the Modify PDP Context Request message is provided with the indication as a new field to convey PDP context priority. In other implementations, the priority update message is a Modify PDP Context Priority message.

Example messages have been provided above for the message having the indication of each respective priority. In some implementations, the messages are based on messages defined in 3GPP (3rd Generation Partnership Project) TS 24.008 V7.5.0 with appropriate modification for including the indication of each respective priority. Other implementations are possible.

There are many possibilities for the indication. In some implementations, the indication includes a respective numerical priority level for each of a plurality of different IP session types. For instance, if there is a first IP session for modem communication, a second IP session for WAP (Wireless Application Protocol) communication, and a third IP session for push email, then the indication may for example be (1,3,2). In this case, the first IP session for modem communication has the highest priority level while the second IP session for WAP communication has the lowest priority level. In specific implementations, the indication is an ordered set of priority levels corresponding to IP sessions that may be maintained. For example, the mobile device may be informed of IP sessions that have been established by way of a message such as an RAU accept message. In response to the message, the mobile device may transmit a message such as an RAU accept with an indication of an ordered set of priority levels corresponding to the IP sessions that have been established.

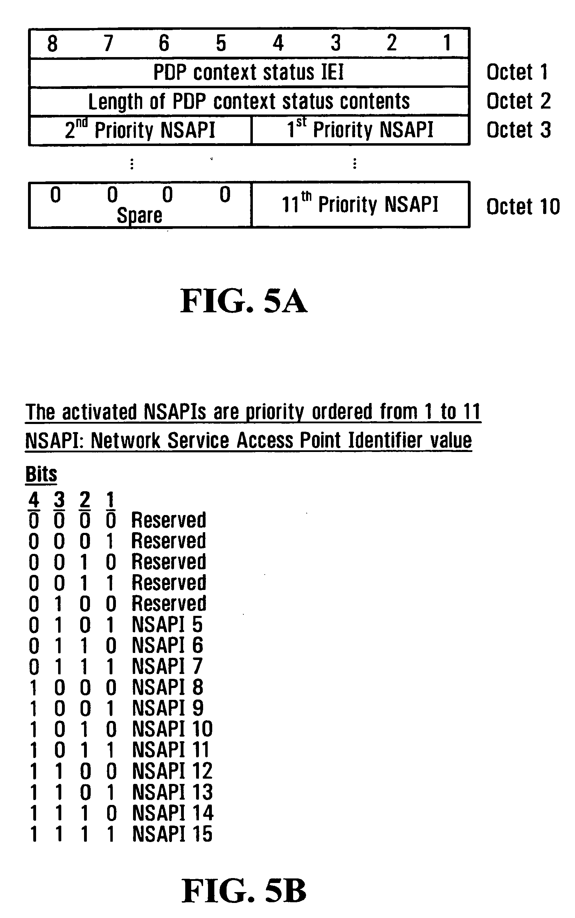

In other implementations, the indication includes an order of priority. For instance, if there is a first IP session for modem communication, and a second IP session for VoIP (Voice over IP), then the indication may for example be (Identifier for the first IP session, Identifier for the second IP session). In this case, the first IP session for modem communication is indicated as having a higher priority than the second IP session for VoIP. Other implementations are possible. Referring now to Figures 5A and 5B, shown are tables of an example PDP context priority information element. It is to be understood that the PDP context priority information element shown in the illustrated example is a specific implementation for the indication for example purposes only. The purpose of the PDP context priority information element is to indicate the priority of each PDP context which can be identified by NSAPI. The priority may be used by the wireless network to determine which PDP contexts to deactivate for issues such as resource limitations. The PDP context status information element is a type 4 information element with a minimum length of 3 octets and 10 octets length maximal. Further restriction on the length may be applied, for example the number of PDP contexts activated. The PDP context status information element is coded according to a coding scheme. In some implementations, the coding scheme includes the numeric number of PDPs. In some implementations, the number of PDPs is preceded by the IEI (information element identifier) for the data field. The table of Figure 5A has entries for encoding the 1^{st} priority NSAPI, the second priority NSAPI, ..., and the 11^{th} priority NSAPI. The entries are encoded according to the encoding scheme outlines in the table of Figure 5B.

In other implementations, the indication identifies the type priority such as for an "Always On" IP Session compared to a short term duration IP Session such as for Internet browsing. Certain types of IP Sessions may implicitly be regarded as having a higher priority than others. Other implementations are possible.

There are many possibilities for the event triggering a priority level update. In some implementations, the event is a change to the IP sessions. In other implementations, the event is user input specifying that there should be a priority level update. In other implementations, the event is a predefined schedule indicating that a priority level update is to be executed. In some implementations, the event is dependent upon the type of message being transmitted, examples of which have been provided above. Other implementations are possible.

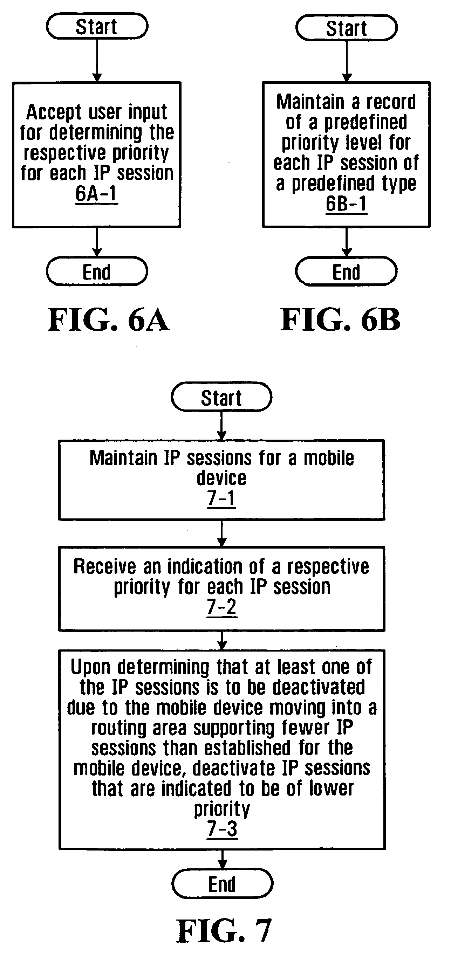

With reference back to Figure 2, there are many ways that the mobile device may determine the respective priority for each IP session. Examples are presented with reference to Figures 6A and 6B. In some implementations, as indicated by step 6A-1, the mobile device accepts user input for determining the respective priority for each IP session. Accordingly, the mobile device determines the respective priority for each IP session based on the user input. In other implementations, as indicated by step 6B-1, the mobile device maintains a record of a predefined priority level for each IP session of a predefined type. Accordingly, the mobile device determines the respective priority for each IP session based on the record. Other implementations are possible.

### Method in a Wireless network

Referring now to Figure 7, shown is a flowchart of an example method of deactivating IP sessions that are indicated to be of lower priority. This method may be implemented by a wireless network, for example by the IP session function 51 of the wireless network 100 shown in Figure 1A.

At step 7-1, the wireless network maintains IP sessions for a mobile device. As described above, the mobile device indicates to the wireless network the priority of IP sessions. At step 7-2, the wireless network receives an indication of a respective priority for each IP session. At step 7-3, upon determining that at least one of the IP sessions is to be deactivated due to the mobile device moving into a routing area supporting fewer IP sessions than are established for the mobile device, the wireless network deactivates an IP session that is indicated to be of lower priority. In the event that more than one IP session is to be deactivated, then more than one IP session that is indicated to be of lower priority is deactivated. Accordingly, IP sessions that are not deactivated are those indicated by the mobile device to be of greater priority.

There are many ways for the wireless network to receive the indication of the respective priority for each IP session. The wireless network may for example receive the indication as it is transmitted by the mobile device using any one or more of the implementations described above.

### IP Sessions

In the examples presented above, references are made to IP sessions. It is to be understood that there are many possibilities for the IP sessions. The IP sessions may for example include any of an Always-On IP session, an IM (Instant Messaging) IP session, a WAP (Wireless Application Protocol) IP session, an MMS (Multimedia Messaging Service) IP session, a DUN (Dial-Up Networking) IP session, an LBS (Location Base Services) IP session, IP Modem IP session, and a PTT (Push-to-Talk) IP session. The nature of the IP sessions is implementation specific and typically depends on the wireless network. In some implementations, the wireless network is a UMTS network and each IP session is part of a respective PDP (Packet Data Protocol) context.

It is therefore to be understood that within the scope of the appended claims, the application may be practised otherwise than as specifically described herein.

## Claims

1. A method in a mobile device (10,80) comprising:
determining (2-1) a respective priority for each of a plurality of Internet Protocol 'IP' sessions of the mobile device (10,80), the respective priorities indicating which of the plurality of IP sessions of the mobile device (10,80) should be maintained and which of the plurality of IP sessions of the mobile device (10,80) should be deactivated if the mobile device (10,80) moves into an area that supports a maximum number of IP sessions per mobile device (10,80)that is fewer than how many IP sessions are established for the mobile device (10,80); and
transmitting (2-2) an indication of each respective priority to a wireless network (100).

2. The method of claim 1 wherein transmitting (2-2) the indication of each respective priority to the wireless network (100) comprises:
transmitting (3A-1) at least one message to the wireless network, the at least one message comprising the indication of each respective priority.

3. The method of claim 2 wherein the at least one message comprises any one or any combination of:
a Routing Area Update 'RAU' request message;
a Modify Packet Data Protocol 'PDP' Context Accept message;
an Activate Packet Data Protocol 'PDP' Request message;
a PDP Status Request message;
a PDP Deactivate message;
a PDP Service Request message; and/or
a priority update message.

4. The method of claim 2 or claim 3 wherein transmitting (3A-1) the at least one message to the wireless network (100) comprises:
transmitting (3B-1) a plurality of messages, each of the plurality of messages providing a dynamic update of the respective priority of at least one of the plurality of IP sessions.

5. The method of claim 2 or claim 3 wherein transmitting (3A-1) the at least one message to the wireless network (100) comprises:
transmitting (3C-1) the at least one message to the wireless network upon an event triggering a priority level update.

6. The method of claim 5 wherein the event triggering the priority level update comprises a change to the plurality of IP sessions.

7. The method of any one of claims 1 to 6 further comprising:
accepting (6A-1) user input;
wherein determining (2-1) the respective priority for each of the plurality of IP sessions is based on the user input.

8. The method of any one of claims 1 to 6 further comprising:
maintaining (6B-1) a record of a predefined priority level for each IP session of a predefined type;
wherein determining (2-1) the respective priority for each of the plurality of IP sessions is based on the record.

9. The method of any one of claims 1 to 8 wherein the plurality of IP sessions comprises any one or any combination of: an Always-On IP session, an Instant Messaging 'IM' IP session, a Wireless Application Protocol 'WAP' IP session, a Multimedia Messaging Service 'MMS' IP session, a Dial-Up Networking 'DUN' IP session, a Location Base Services 'LBS' IP session, an IP Modem IP session, and/or a Push-to-Talk 'PTT' IP session.

10. The method of any one of claims 1 to 9 wherein each of the plurality of IP sessions is part of a respective PDP context.

11. A computer readable medium having computer executable instructions stored thereon for execution on a processor (12) of a computing device (10,80) so as to implement the method of any one of claims 1 to 10.

12. A mobile device (10,80) comprising:
a wireless access radio (11) adapted to communicate with a wireless network (100);
an IP session priority function (13) adapted to:
determine (2-1) a respective priority for each of a plurality of IP sessions of the mobile device (10,80), the respective priorities indicating which of the plurality of IP sessions of the mobile device (10,80)should be maintained and which of the plurality of IP sessions of the mobile device (10,80)should be deactivated if the mobile device (10,80)moves into an area that supports a maximum number of IP sessions per mobile device that is fewer than how many IP sessions are established for the mobile device (10,80); and
transmit (2-2) an indication of each respective priority to the wireless network.

13. The mobile device (10,80)of claim 12 wherein the IP session priority function comprises:
a Non-Access Stratum 'NAS' for managing IP sessions; and
an Access Stratum 'AS' for managing an air interface or the wireless access radio, the AS comprising a respective Radio Access Bearer 'RAB' for each IP session that is active.

14. A method in a wireless network (100) comprising:
maintaining (7-1) a plurality of IP sessions for a mobile device (10,80);
receiving (7-2) an indication of a respective priority for each of the plurality of IP sessions; and
upon determining that at least one of the plurality of IP sessions of the mobile device (10,80)is to be deactivated due to the mobile device (10,80)moving into an area supporting fewer IP sessions per mobile device (10,80) than are established for the mobile device (10,80), deactivating (7-3) an IP session of the mobile device (10,80)that is indicated to be of lower priority than at least one other of said plurality of IP sessions.

15. The method of claim 14 wherein receiving (7-2) the indication of the respective priority for each of the plurality of IP sessions comprises:
receiving (3A-1) at least one message from the mobile device (10,80), the at least one message comprising the indication of each respective priority.

16. The method of claim 15 wherein the at least one message comprises any one or any combination of:
an RAU request message;
a Modify PDP Context Accept message;
an Activate PDP Request message;
a PDP Status Request message;
a PDP Deactivate message;
a PDP Service Request message; and/or
a priority update message.

17. The method of claim 15 or claim 16 wherein receiving (3A-1) at least one message from the mobile device (10,80) comprises:
receiving (3B-1) a plurality of messages, each of the plurality of messages a providing a dynamic update of the respective priority of at least one of the plurality of IP sessions.

18. The method of any one of claims 14 to 17 wherein the plurality of IP sessions comprises any one or any combination of: an Always-On IP session, an IM IP session, a WAP IP session, a MMS IP session, a DUN IP session, a LBS IP session, an IP Modem IP session, and/or a PTT IP session.

19. The method of any one of claims 14 to 18 wherein each of the plurality of IP sessions is part of a respective PDP context.

20. A computer readable medium having computer executable instructions stored thereon for execution on a processor (52) of a computing device or system so as to implement the method of any one of claims 14 to 19.

21. A wireless network (100) comprising an IP session function (51) adapted to:
maintain (7-1) a plurality of IP sessions for a mobile device (10,80);
receive (7-2) an indication of a respective priority for each of the plurality of IP sessions; and
upon determining that at least one of the plurality of IP sessions of the mobile device (10,80)is to be deactivated due to the mobile device (10,80)moving into an area supporting fewer IP sessions per mobile device (10,80) than are established for the mobile device (10,80), deactivate (7-3) an IP session of the mobile device (10,80)that is indicated to be of lower priority.

22. The wireless network of claim 21 further comprising:
a Serving General Packet Radio Service Support Node 'SGSN' (50) for receiving the indication of the respective priority for each of the plurality of IP sessions;
wherein the SGSN 50 comprises the IP session function.

## Patentansprüche

1. Verfahren auf einem mobilen Gerät (10, 80), umfassend:
das Feststellen (2-1) einer jeweiligen Priorität für jede einer Mehrzahl von Internetprotokoll (IP) -Sitzungen des mobilen Geräts (10, 80), wobei die jeweiligen Prioritäten angeben, welche der Mehrzahl von IP-Sitzungen des mobilen Geräts (10, 80) beibehalten werden sollte und welche der Mehrzahl von IP-Sitzungen des mobilen Geräts (10, 80) deaktiviert werden sollte, wenn sich das mobile Gerät (10, 80) in einen Bereich bewegt, in dem eine maximale Anzahl von IP-Sitzungen pro mobilem Gerät (10, 80) unterstützt wird, die geringer ist als die Anzahl der für das mobile Gerät (10, 80) hergestellten IP-Sitzungen; und
das Übertragen (2-2) einer Anzeige jeder jeweiligen Priorität an ein Drahtlos-Netz (100).

2. Verfahren nach Anspruch 1, wobei das Übertragen (2-2) der Anzeige jeder jeweiligen Priorität an das Drahtlos-Netz (100) umfasst:
Übertragen (3A-1) mindestens einer Nachricht an das Drahtlos-Netz, wobei die mindestens eine Nachricht die Anzeige jeder jeweiligen Priorität beinhaltet.

3. Verfahren nach Anspruch 2, wobei die mindestens eine Nachricht eine oder eine Kombination von:
einer Routing-Area-Update (RAU) -Anforderung;
einer Modify-Packet Data Protocol (PDP) -Context-Accept-Nachricht;
einer Activate-Packet-Data-Protocol (PDP) -Anforderung;
einer PDP-Status-Anforderung;
einer PDP-Deactivate-Nachricht;
einer PDP-Service-Anforderung; und/oder
einer Prioritätsaktualisierungs-Nachricht umfasst.

4. Verfahren nach Anspruch 2 oder Anspruch 3, wobei das Übertragen (3A-1) der mindestens einen Nachricht an das Drahtlos-Netz (100) umfasst:
das Übertragen (3B-1) einer Mehrzahl von Nachrichten, wobei jede der Mehrzahl von Nachrichten eine dynamische Aktualisierung der jeweiligen Priorität mindestens einer der Mehrzahl von IP-Sitzungen bereitstellt.

5. Verfahren nach Anspruch 2 oder Anspruch 3, wobei das Übertragen (3A-1) der mindestens einen Nachricht an das Drahtlos-Netz (100) umfasst:
das Übertragen (3C-1) der mindestens einen Nachricht an das Drahtlos-Netz bei einem Ereignis, das eine Aktualisierung der Prioritätsstufe veranlasst.

6. Verfahren nach Anspruch 5, wobei das Ereignis, das die Aktualisierung der Prioritätsstufe veranlasst, eine Änderung an der Mehrzahl von IP-Sitzungen umfasst.

7. Verfahren nach einem der Ansprüche 1 bis 6, ferner umfassend:
das Akzeptieren (6A-1) einer Benutzereingabe;
wobei das Feststellen (2-1) der jeweiligen Priorität für jede der Mehrzahl von IP-Sitzungen auf der Benutzereingabe basiert.

8. Verfahren nach einem der Ansprüche 1 bis 6, ferner umfassend:
das Führen (6B-1) einer Aufzeichnung einer vordefinierten Prioritätsstufe für jede IP-Sitzung eines vorab festgelegten Typs;
wobei das Feststellen (2-1) der jeweiligen Priorität für jede der Mehrzahl von IP-Sitzungen auf der Aufzeichnung basiert.

9. Verfahren nach einem der Ansprüche 1 bis 8, wobei die Mehrzahl von IP-Sitzungen eine oder eine Kombination von: einer Always-On-IP-Sitzung, einer Instant-Messaging (IM) -IP-Sitzung, einer Wireless-Application-Protocol (WAP) -IP-Sitzung, einer Multimedia-Messaging-Service (MMS) -IP-Sitzung, einer Dial-Up-Networking (DUN) -IP-Sitzung, einer Location-Base-Services (LBS) -IP-Sitzung, einer IP-Modem-IP-Sitzung und/oder einer Push-to-Talk (PTT) -IP-Sitzung umfasst.

10. Verfahren nach einem der Ansprüche 1 bis 9, wobei jede der Mehrzahl von IP-Sitzungen Teil eines jeweiligen PDP-Kontexts ist.

11. Computerlesbarer Datenträger mit darauf gespeicherten, von einem Rechner ausführbaren Anweisungen zur Ausführung auf einem Prozessor (12) eines Datenverarbeitungsgeräts (10, 80), um das Verfahren nach einem der Ansprüche 1 bis 10 zu realisieren.

12. Mobiles Gerät (10, 80), umfassend;
ein Wireless Access Radio (11), das dafür ausgelegt ist, mit einem Drahtlos-Netz (100) zu kommunizieren;
eine IP-Sitzungs-Prioritätsfunktion (13), die ausgelegt ist für:
das Feststellen (2-1) einer jeweiligen Priorität für jede einer Mehrzahl von IP-Sitzungen des mobilen Geräts (10, 80), wobei die jeweiligen Prioritäten angeben, welche der Mehrzahl von IP-Sitzungen des mobilen Geräts (10, 80) beibehalten werden sollte und welche der Mehrzahl von IP-Sitzungen des mobilen Geräts (10, 80) deaktiviert werden sollte, wenn sich das mobile Gerät (10, 80) in einen Bereich bewegt, in dem eine maximale Anzahl von IP-Sitzungen pro mobilem Gerät unterstützt wird, die geringer ist als die Anzahl der für das mobile Gerät (10, 80) hergestellten IP-Sitzungen; und
das Übertragen (2-2) einer Anzeige jeder jeweiligen Priorität an das Drahtlos-Netz.

13. Mobiles Gerät (10, 80) nach Anspruch 12, wobei die IP-Sitzungs-Prioritätsfunktion umfasst:
ein Non-Access Stratum (NAS) zum Verwalten von IP-Sitzungen; und
ein Access Stratum (AS) zum Verwalten einer Luftschnittstelle oder des Wireless Access Radio, wobei das AS einen jeweiligen Radio Access Bearer (RAB) für jede aktive IP-Sitzung umfasst.

14. Verfahren in einem Drahtlos-Netz (100), umfassend:
das Unterhalten (7-1) einer Mehrzahl von IP-Sitzungen für ein mobiles Gerät (10, 80);
das Empfangen (7-2) einer Anzeige einer jeweiligen Priorität für jede der Mehrzahl von IP-Sitzungen; und
wenn festgestellt wird, dass mindestens eine der Mehrzahl von IP-Sitzungen des mobilen Geräts (10, 80) deaktiviert werden muss, weil sich das mobile Gerät (10, 80) in einen Bereich bewegt, in dem weniger IP-Sitzungen pro mobilem Gerät (10, 80) unterstützt werden als für das mobile Gerät (10, 80) hergestellt sind, das Deaktivieren (7-3) einer IP-Sitzung des mobilen Geräts (10, 80), für die angezeigt wird, dass sie eine niedrigere Priorität hat als mindestens eine andere der Mehrzahl von IP-Sitzungen.

15. Verfahren nach Anspruch 14, wobei das Empfangen (7-2) der Anzeige der jeweiligen Priorität für jede der Mehrzahl von IP-Sitzungen umfasst:
Empfangen (3A-1) mindestens einer Nachricht von dem mobilen Gerät (10, 80), wobei die mindestens eine Nachricht die Anzeige jeder jeweiligen Priorität umfasst.

16. Verfahren nach Anspruch 15, wobei die mindestens eine Nachricht eine oder eine Kombination von:
einer RAU-Anforderung;
einer Modify-PDP-Context-Accept-Nachricht;
einer Activate-PDP-Anforderung;
einer PDP-Status-Anforderung;
einer PDP-Deactivate-Nachricht;
einer PDP-Service-Anforderung; und/oder
einer Prioritätsaktualisierungs-Nachricht umfasst.

17. Verfahren nach Anspruch 15 oder Anspruch 16, wobei das Empfangen (3A-1) mindestens einer Nachricht von dem mobilen Gerät (10, 80) umfasst:
das Empfangen (3B-1) einer Mehrzahl von Nachrichten, wobei jede der Mehrzahl von Nachrichten eine dynamische Aktualisierung der jeweiligen Priorität mindestens einer der Mehrzahl von IP-Sitzungen bereitstellt.

18. Verfahren nach einem der Ansprüche 14 bis 17, wobei die Mehrzahl von IP-Sitzungen eine oder eine Kombination von: einer Always-On-IP-Sitzung, einer IM-IP-Sitzung, einer WAP-IP-Sitzung, einer MMS-IP-Sitzung, einer DUN-IP-Sitzung, einer LBS-IP-Sitzung, einer IP-Modem-IP-Sitzung und/oder einer PTT-IP-Sitzung umfasst.

19. Verfahren nach einem der Ansprüche 14 bis 18, wobei jede der Mehrzahl von IP-Sitzungen Teil eines jeweiligen PDP-Kontexts ist.

20. Computerlesbarer Datenträger mit darauf gespeicherten, von einem Rechner ausführbaren Anweisungen zur Ausführung auf einem Prozessor (52) eines Datenverarbeitungsgeräts oder -systems, um das Verfahren nach einem der Ansprüche 14 bis 19 zu realisieren.

21. Drahtlos-Netz (100), umfassend eine IP-Sitzungsfunktion (51), die geeignet ist für:
das Unterhalten (7-1) einer Mehrzahl von IP-Sitzungen für ein mobiles Gerät (10, 80);
das Empfangen (7-2) einer Anzeige einer jeweiligen Priorität für jede der Mehrzahl von IP-Sitzungen; und
wenn festgestellt wird, dass mindestens eine der Mehrzahl von IP-Sitzungen des mobilen Geräts (10, 80) deaktiviert werden muss, weil sich das mobile Gerät (10, 80) in einen Bereich bewegt, in dem weniger IP-Sitzungen pro mobilem Gerät (10, 80) unterstützt werden als für das mobile Gerät (10, 80) hergestellt sind, das Deaktivieren (7-3) einer IP-Sitzung des mobilen Geräts (10, 80), für die angezeigt wird, dass sie eine niedrigere Priorität hat.

22. Drahtlos-Netz nach Anspruch 21, ferner umfassend:
einen Serving General Packet Radio Service Support Node (SGSN) (50) zum Empfangen der Anzeige der jeweiligen Priorität für jede der Mehrzahl von IP-Sitzungen;
wobei der SGSN (50) die IP-Sitzungsfunktion beinhaltet.

## Revendications

1. Un procédé dans un dispositif mobile (10, 80) comprenant :
la détermination (2-1) d'une priorité respective pour chaque session d'une pluralité de sessions Internet Protocol, ci-après dénommé IP, du dispositif mobile (10, 80), les priorités respectives indiquant lesquelles des sessions de la pluralité de sessions IP du dispositif mobile (10, 80) doivent être maintenues et lesquelles des sessions de la pluralité de sessions IP du dispositif mobile (10, 80) doivent être désactivées si le dispositif mobile (10, 80) est déplacé vers une zone qui accepte un nombre maximum de sessions IP par dispositif mobile (10, 80) qui est inférieur au nombre de sessions IP qui sont établies pour le dispositif mobile (10, 80), et
la transmission (2-2) d'une indication de chaque priorité respective à un réseau sans fil (100).

2. Le procédé selon la revendication 1 où la transmission (2-2) de l'indication de chaque priorité respective au réseau sans fil (100) comprend :
la transmission (3A-1) d'au moins un message au réseau sans fil, le au moins un message comprenant l'indication de chaque priorité respective.

3. Le procédé selon la revendication 2 où le au moins un message comprend l'un quelconque ou une combinaison de :
un message de demande de mise à jour de zone de routage « RAU »,
un message d'acceptation de modification de contexte de protocole de données par paquets « PDP »,
un message de demande d'activation de protocole de données par paquets « PDP », un message de demande d'état de PDP,
un message de désactivation de PDP,
un message de demande de service de PDP, et/ou
un message de mise à jour de priorité.

4. Le procédé selon la revendication 2 ou 3 où la transmission (3A-1) du au moins un message au réseau sans fil (100) comprend :
la transmission (3B-1) d'une pluralité de messages, chaque message de la pluralité de messages fournissant une mise à jour dynamique de la priorité respective d'au moins une session de la pluralité de sessions IP.

5. Le procédé selon la revendication 2 ou 3 où la transmission (3A-1) du au moins un message au réseau sans fil (100) comprend :
la transmission (3C-1) du au moins un message au réseau sans fil en cas d'événement déclenchant une mise à jour de niveau de priorité.

6. Le procédé selon la revendication 5 où l'événement déclenchant la mise à jour de niveau de priorité comprend une modification dans la pluralité de sessions IP.

7. Le procédé selon l'une quelconque des revendications 1 à 6 comprenant en outre :
l'acceptation (6A-1) d'une entrée utilisateur,
où la détermination (2-1) de la priorité respective pour chaque session de la pluralité de sessions IP est basée sur l'entrée utilisateur.

8. Le procédé selon l'une quelconque des revendications 1 à 6 comprenant en outre :
l'entretien (6B-1) d'un enregistrement d'un niveau de priorité prédéfini pour chaque session IP d'un type prédéfini,
où la détermination (2-1) de la priorité respective pour chaque session de la pluralité de sessions IP est basée sur l'enregistrement.

9. Le procédé selon l'une quelconque des revendications 1 à 8 où la pluralité de sessions IP comprend l'une quelconque ou toute combinaison de : une session IP toujours connectée, une session IP de messagerie instantanée « IM », une session IP de protocole pour des applications sans fil « WAP », une session IP de service de messagerie multimédia « MMS », une session IP de mise en réseau par connexion téléphonique « DUN », une session IP de services de localisation « LBS », une session IP de modem IP et/ou une session IP de conversation par bouton-poussoir « PTT ».

10. Le procédé selon l'une quelconque des revendications 1 à 9 où chaque session de la pluralité de sessions IP fait partie d'un contexte de PDP respectif.

11. Un support lisible par ordinateur possédant en mémoire des instructions exécutables par ordinateur pour exécution sur un processeur (12) d'un dispositif informatique (10, 80) de façon à mettre en oeuvre le procédé selon l'une quelconque des revendications 1 à 10.

12. Un dispositif mobile (10, 80) comprenant :
un système radio d'accès sans fil (11) adapté de façon à communiquer avec un réseau sans fil (100),
une fonction de priorité de session IP (13) adapté de façon à :
déterminer (2-1) une priorité respective pour chaque session d'une pluralité de sessions IP du dispositif mobile (10, 80), les priorités respectives indiquant lesquelles des sessions de la pluralité de sessions IP du dispositif mobile (10, 80) doivent être maintenues et lesquelles des sessions de la pluralité de sessions IP du dispositif mobile (10, 80) doivent être désactivées si le dispositif mobile (10,80) est déplacé vers une zone qui accepte un nombre maximum de sessions IP par dispositif mobile qui est inférieur au nombre de sessions IP qui sont établies pour le dispositif mobile (10, 80), et
transmettre (2-2) une indication de chaque priorité respective au réseau sans fil.

13. Le dispositif mobile (10, 80) selon la revendication 12 où la fonction de priorité de session IP comprend :
une strate de non-accès destinée à gérer des sessions IP, et
une strate d'accès, ci-après dénommée AS, destinée à gérer une interface hertzienne ou le système radio d'accès sans fil, l'AS comprenant un circuit support d'accès radio respectif pour chaque session IP qui est active.

14. Un procédé dans un réseau sans fil (100) comprenant :
l'entretien (7-1) d'une pluralité de sessions IP pour un dispositif mobile (10, 80),
la réception (7-2) d'une indication d'une priorité respective pour chaque session de la pluralité de sessions IP, et
après la détermination qu'au moins une session de la pluralité de sessions IP du dispositif mobile (10, 80) doit être désactivée du fait du déplacement du dispositif mobile (10, 80) vers une zone acceptant moins de sessions IP par dispositif mobile (10,80) que ne sont établies pour le dispositif mobile (10, 80), la désactivation (7-3) d'une session IP du dispositif mobile (10, 80) qui est indiquée comme étant d'une priorité plus basse qu'au moins une autre des sessions de ladite pluralité de sessions IP.

15. Le procédé selon la revendication 14 où la réception (7-2) de l'indication de la priorité respective pour chaque session de la pluralité de sessions IP comprend :
la réception (3A-1) d'au moins un message du dispositif mobile (10, 80), le au moins un message comprenant l'indication de chaque priorité respective.

16. Le procédé selon la revendication 15 où le au moins un message comprend l'un quelconque ou une combinaison de :
un message de demande de RAU,
un message d'acceptation de modification de contexte de PDP,
un message de demande d'activation de PDP,
un message de demande d'état de PDP,
un message de désactivation de PDP,
un message de demande de service de PDP, et/ou
un message de mise à jour de priorité.

17. Le procédé selon la revendication 15 ou 16 où la réception (3A-1) d'au moins un message du dispositif mobile (10, 80) comprend :
la réception (3B-1) d'une pluralité de messages, chaque message de la pluralité de messages fournissant une mise à jour dynamique de la priorité respective d'au moins une session de la pluralité de sessions IP.

18. Le procédé selon l'une quelconque des revendications 14 à 17 où la pluralité de sessions IP comprend l'une quelconque ou toute combinaison de : une session IP toujours connectée, une session IP IM, une session IP WAP, une session IP MMS, une session IP DUN, une session IP LBS, une session IP de modem IP et/ou une session IP PTT.

19. Le procédé selon l'une quelconque des revendications 14 à 18 où chaque session de la pluralité de sessions IP fait partie d'un contexte de PDP respectif.

20. Un support lisible par ordinateur possédant en mémoire des instructions exécutables par ordinateur pour exécution sur un processeur (52) d'un dispositif ou système informatique de façon à mettre en oeuvre le procédé selon l'une quelconque des revendications 14 à 19.

21. Un réseau sans fil (100) comprenant une fonction de session IP (51) adaptée de façon à :
entretenir (7-1) une pluralité de sessions IP pour un dispositif mobile (10, 80),
recevoir (7-2) une indication d'une priorité respective pour chaque session de la pluralité de sessions IP, et
après la détermination qu'au moins une session de la pluralité de sessions IP du dispositif mobile (10, 80) doit être désactivée du fait du déplacement du dispositif mobile (10, 80) vers une zone acceptant moins de sessions IP par dispositif mobile (10, 80) que ne sont établies pour le dispositif mobile (10, 80), désactiver (7-3) une session IP du dispositif mobile (10, 80) qui est indiquée comme étant d'une priorité plus basse.

22. Le réseau sans fil selon la revendication 21 comprenant en outre :
un noeud de support du service général de radiocommunications en mode paquet de desserte (50), ci-après dénommé noeud SGSN, pour la réception de l'indication de la priorité respective pour chaque session de la pluralité de sessions IP,
où le noeud SGSN 50 comprend la fonction de session IP.
